# EUROPÄISCHE PATENTSCHRIFT

(11) **EP 1 503 240 B1**
(45) Veröffentlichungstag und Bekanntmachung des Hinweises auf die Patenterteilung: **15.03.2006**
(21) Anmeldenummer: 04017440.1
(22) Anmeldetag: 23.07.2004
(51) Int. Cl.: G03B 37/02, H04N 5/225, G02B 13/06

(54) **Kamerasystem**
Camera system
Système de caméra

(30) Priorität: 26.07.2003 DE 10334185
(43) Veröffentlichungstag der Anmeldung: 02.02.2005
(73) Patentinhaber: Diehl BGT Defence GmbH & Co.KG, 88662 Überlingen (DE)
(72) Erfinder: Krogmann, Dirk, 88690 Uhldingen (DE); Moldenhauer, Kai, 78355 Hohenfels (DE); Tholl, Hans Dieter, Dr., 88690 Uhldingen (DE)
(74) Vertreter: Diehl Patentabteilung

(56) Entgegenhaltungen:
- EP-A- 1 178 352
- GB-A- 867 251
- US-A- 4 303 308
- US-A- 6 157 018

## Beschreibung

Die Erfindung geht aus von einem Kamerasystem mit einem Sensor und einem einen Konvexspiegel umfassenden ersten optischen System, durch das ein Raumwinkelbereich über einen ersten Strahlengang auf dem Sensor abbildbar ist.

Zur Überwachung von großen Raumbereichen, wie beispielsweise Bahnhöfen, Flughäfen, öffentlichen Plätzen, Stadien und dergleichen sind Kamerasysteme bekannt, die eine Sicht in einen sehr großen Raumwinkelbereich - beispielsweise rundum - ermöglichen. Der Übersichtsartikel "Omnidirectional Vision", Proceedings of the Eighth International Symposium of Robotic Research, Hayama, Japan, October 3-7, 1997, beschreibt Kamerasysteme, bei denen der Strahlengang eines optischen Systems auf einen Konvexspiegel gerichtet ist und auf diese Weise Gegenstände aus einem sehr großen Raumwinkelbereich auf einem Sensor abbildbar sind. Als Konvexspiegel dient hierbei ein kugelförmiger Spiegel, durch den eine Rundumsicht erreicht werden kann. Durch den großen einsehbaren Raumwinkelbereich ergibt sich allerdings der Nachteil, dass vom Konvexspiegel weit entfernte Gegenstände nur klein und wenig detailliert auf dem Sensor abgebildet werden.

Der Erfindung liegt daher die Aufgabe zugrunde, ein Kamerasystem anzugeben, bei dem zusätzlich zu einem großen betrachtbaren Raumwinkelbereich Detailinförmationen aus dem Raumwinkelbereich erfasst werden können.

Diese Aufgabe wird durch ein Kamerasystem der eingangs genannten Art gelöst, das ein zweites optisches System umfasst, durch das ein Teilbereich des Raumwinkelbereichs über einen zweiten Strahlengang auf einem Detailsensor erfassbar ist, wobei der Detailbereich durch ein relativ zu den Sensoren bewegliches optisches Element auswählbar ist.

Die Erfindung geht von der Überlegung aus, dass eine Detailinformation zusätzlich zu einer beispielsweise Rundumsicht durch ein zweites Kamerasystem erreicht werden kann, dessen Blickfeld auf einen Teilbereich innerhalb des vom ersten Kamerasystem abgedeckten Raumwinkelbereichs bewegt werden kann. Hierbei wird die Kamera auf den interessierenden Teilbereich gerichtet. Ein sehr präzises Einschwenken des detaillierten Blickfelds auf den interessierenden detaillierten Teilbereich ist einfacher möglich, wenn nicht die gesamte Kamera, sondern nur ein optisches Element zum Einschwenken auf den interessierenden Teilbereich bewegt werden muss. Zusätzlich können gegenüber zwei getrennten Kamerasystemen Bauteile und Kosten eingespart werden. Es wird auf diese Weise in einem Kamerasystem das passive erste optische System durch ein aktives zweites optisches System zur detaillierten Analyse eines besonders interessierenden Teilbereichs ergänzt.

Der Sensor kann zur Erfassung von sichtbarem oder infrarotem Licht ausgelegt sein. Als im infraroten Frequenzbereich aktiver Sensor kommt insbesondere ein Mikro-Bolometer infrage, das ein Halbleiterbauelement mit einem Material umfasst, dessen elektrischer Widerstand bei einer Temperaturerhöhung abnimmt. Als Konvexspiegel werden alle Spiegel verstanden, die zumindest in einer kartesischen oder Polarkoordinatenrichtung konvex gekrümmt sind, wie beispielsweise eine auf ihrer Außenfläche verspiegelte Kugel, ein Kegel oder auch ein in Axialrichtung nach innen gewölbter Kegel. Auch andere, beispielsweise hyperbolisch geformte rotationssymmetrische Spiegel können in Betracht kommen.

Vorteilhafterweise umfasst das Kamerasystem mindestens ein im ersten und im zweiten Strahlengang angeordnetes optisches Element. Durch eine solche gemeinsame Nutzung des optischen Elements vom ersten und zweiten optischen System können Bauteile eingespart werden. Außerdem wird die Ausrichtung des Teilbereichs auf ein aus dem großen Raumwinkelbereich ausgesuchtes Gebiet erleichtert, da durch die Verwendung des gleichen optischen Elements im ersten und zweiten Strahlengang die optischen Fehler des ersten und zweiten optischen Systems aneinander angeglichen werden können. Es können auf diese Weise weite erste und detaillierte zweite Bilder erreicht werden, deren optischer Fehler aneinander angeglichen ist, was eine Zuordnung der Bilder zueinander erleichtert.

In einer weiteren Ausgestaltung der Erfindung wird vorgeschlagen, dass der Sensor für einen ersten Frequenzbereich und der Detailsensor für einen zweiten vom ersten unterschiedlichen Frequenzbereich ausgelegt ist. Es können auf diese Weise zusätzliche Informationen erhalten werden, die in nur einem Frequenzbereich nicht zugänglich ist. Beispielhaft für eine solche Ausgestaltung ist eine Kamera angeführt, die zur Überwachung einer Flughafenhalle einen rundum umlaufenden Raumwinkelbereich im sichtbaren Frequenzbereich überwacht, wobei der Teilbereich auf eine spezielle Person gerichtet werden kann. Durch einen im infraroten Spektralbereich sensitiven Detailsensor kann die Temperatur der Person abgetastet und somit Information über deren Gesundheitszustand erhalten werden.

Es wird außerdem vorgeschlagen, dass das Kamerasystem ein dichroitisches Element zur Trennung des ersten vom zweiten Strahlengang umfasst. Mit einem solchen Element kann der Strahlengang des zweiten optischen Systems in den ersten Strahlengang ein- und/oder aus ihm ausgekoppelt werden, wodurch nachfolgende optische Elemente sowohl als Elemente des ersten als auch des zweiten optischen Systems verwendet werden können. Ein dichroitisches Element weist eine unterschiedliche Durchlässigkeit für Strahlungen unterschiedlicher Frequenzen auf und ist für eine Strahlung einer ersten Frequenz beispielsweise durchlässig und reflektiert Strahlung einer zweiten Frequenz. Es ist somit eine Trennung von Strahlung des ersten Frequenzbereichs von Strahlung des zweiten Frequenzbereichs möglich. Im Einzelfall kann die erste Frequenz schmalbandig innerhalb eines breiten Frequenzbandes der zweiten Frequenz liegen.

In einer weiteren vorteilhaften Ausgestaltung der Erfindung umfasst das Kamerasystem eine Strahlungsquelle und ein optisches Element zur Einkopplung von Strahlung aus der Strahlungsquelle in den ersten Strahlengang. Auf diese Weise kann ein interessierender Gegenstand im Raumwinkelbereich beleuchtet oder in einem interessierenden Frequenzbereich abgetastet werden, so dass eine weitere Zusatzinformation über diesen Gegenstand erhältlich ist. Außerdem kann der Teilbereich auf den angestrahlten bzw. abgetasteten Gegenstand gerichtet werden, so dass der Gegenstand detailliert betrachtet werden kann. Durch die Einkopplung der Strahlung in den ersten Strahlengang können optische Elemente sowohl zur Lenkung der von der Strahlungsquelle ausgehenden Strahlung als auch der aus dem Teilbereich und dem Raumwinkelbereich einfallenden Strahlung verwendet werden.

Zweckmäßigerweise umfasst das Kamerasystem eine Entfernungsmessvorrichtung, wobei die Strahlungsquelle ein Laser und der Detailsensor eine Photodiode ist. Mit Hilfe einer entsprechenden Steuer- und Auswerteelektronik kann auf diese Weise die Entfernung eines interessierenden Gegenstands ermittelt werden.

Ein weiterer Vorteil wird erreicht, indem das Kamerasystem eine Vorrichtung zur Spektralanalyse umfasst, wobei die Strahlungsquelle ein Laser und der Detailsensor ein Spektrometer ist. Auf diese Weise kann eine Spektralanalyse eines Gegenstands oder von Gas in einem interessierenden Teilbereich vorgenommen werden. Es kann Rauch, Gift, Gas oder allgemein eine schlechte Luftqualität erkannt und Gegenmaßnahmen eingeleitet werden. Als Spektrometer wird eine Sensorvorrichtung bezeichnet, mit der einfallende Strahlung quantitativ nach mehrere diskrete Frequenzen oder Frequenzen eines kontinuierlichen Frequenzband detektiert werden kann. Diskrete Frequenzen können beispielsweise mit einer Sensorvorrichtung detektiert werden, die mehrere in verschiedenen Frequenzen empfindliche Photodetektoren, z.B. Photodioden aufweist. Ein kontinuierliches Frequenzband kann mit Hilfe eine durchstimmbaren Photodetektors frequenzaufgelöst quantitativ dargestellt werden.

Zweckmäßigerweise ist der Laser ein Mehrfrequenzlaser, dessen Frequenz in einem vorbestimmten Intervall einstellbar ist oder der mehrere unterschiedliche Laserdioden umfasst. Die Spektralanalyse kann auf diese Weise auf speziell interessierende Moleküle oder chemische Elemente ausgerichtet werden.

Die gute Möglichkeit zur gemeinsamen Nutzung von optischen Elementen wird erreicht, indem der Sensor mit dem Detailsensor einstückig ausgeführt ist. Außerdem können Bauteile, wie Steuerungen, Halterungen oder Verkabelungen eingespart werden.

Es wird des Weiteren vorgeschlagen, dass das Kamerasystem einen zweiten im ersten Strahlengang angeordneten Spiegel umfasst. Dieser mit dem Konvexspiegel zusammenwirkende zweite Spiegel kann zur Kompensation von optischen Fehlern des Konvexspiegels verwendet werden. So kann beispielsweise durch eine hyperbolische Form des zweiten Spiegels einem optischen Fehler eines als Kugel ausgestalteten Konvexspiegels entgegengewirkt werden. Die aus Konvexspiegel und zweitem Spiegel bestehende zweistufige Spiegelanordnung wird zweckmäßigerweise so ausgelegt, dass das erste optische System nur ein effektives Projektionszentrum aufweist. Dies ermöglicht auf einfache Weise, über geeignete Transformationen aus omnidirektionalen Bildern fehlerfreie panoramische (über zylindrische Projektion) und perspektivische (ebene Projektion) Bilder zu rekonstruieren. Je mehr effektive Projektionszentren die Spiegelanordnung anfasst und je weiter diese Projektionszentren voneinander entfernt sind, desto mehr optische Aberrationen treten im omnidirektionalen System auf.

Vorteilhafterweise umfasst der Konvexspiegel eine Öffnung, durch die der erste Strahlengang hindurchgeführt ist. Hierdurch kann ein Totraum genutzt werden, in dem sich der Sensor ansonsten selber abbilden würde. Durch eine optionale Anordnung des Sensors im Inneren des konvexspiegels kann er stabil und geschützt positioniert werden.

Eine einfache und präzise Strahlablenkung im zweiten Strahlengang wird erreicht, wenn das bewegliche optische Element eine Sammellinse und eine Zerstreuungslinse umfasst, die gegeneinander verschiebbar sind. Die Linsen können Mikrolinsen oder mikrooptische Linsenraster sein.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. In den Figuren dargestellte gleichartige Elemente sind mit gleichen Bezugszeichen versehen.

Es zeigen:
- Fig. 1: ein Kamerasystem mit einem omnidirektionalen Blickfeld und einem Laserentfernungsmessgerät mit einem ausrichtbaren Laserstrahl,
- Fig. 2: ein Kamerasystem mit einem omnidirektionalen Blickfeld und einem Spektrometer,
- Fig. 3: ein Karnerasystem mit einem omnidirektionalen Blickfeld und einem ausrichtbaren und zoombaren Zusatzblickfeld und
- Fig. 4: eine Abbildung auf einem Sensor und auf einem innenliegenden Detailsensor.

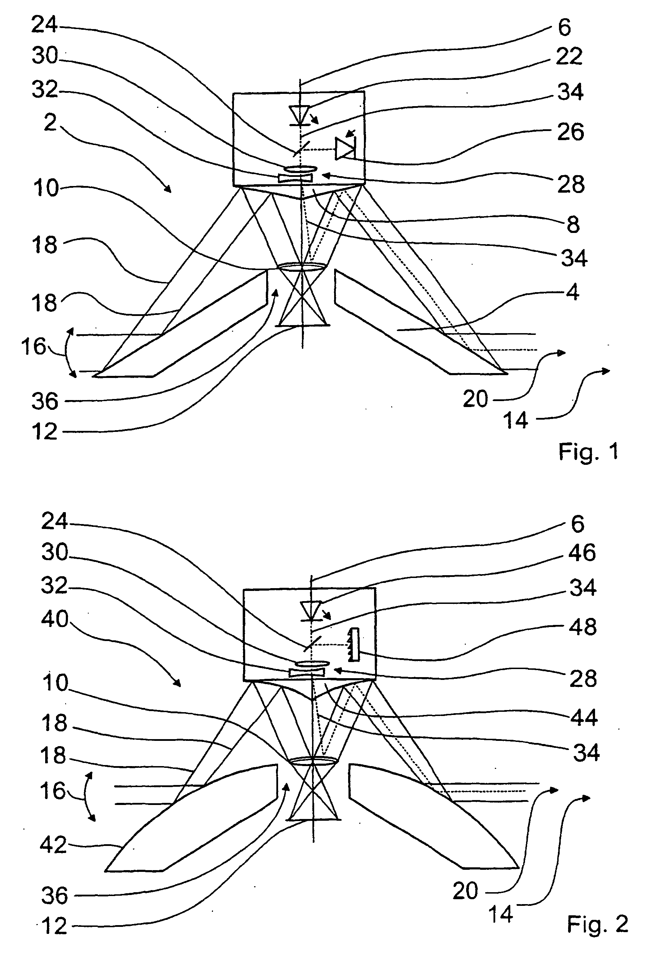

Figur 1 zeigt ein Kamerasystem 2 mit einem ersten optischen System zur Erzeugung einer Rundumsicht. Das erste optische System umfasst einen als außenverspiegelten Konus ausgestalteten Konvexspiegel 4, der um eine Längsachse 6 des Kamerasystems 2 rotationssymmetrisch angeordnet ist. Das erste optische System umfasst außerdem einen zweiten Spiegel 8, der ebenfalls als außenverspiegelter Konus und rotationssymmetrisch um die Längsachse 6 angeordnet ist. Der Spiegel 8 und der Konvexspiegel 4 sind aus Aluminium gefertigt, das an seiner Außenfläche poliert ist. Es ist auch möglich, die Verspiegelung der beiden Spiegel 8, 4 durch eine dünne Silber- oder Goldbeschichtung auf einem Metallsubstrat herzustellen. Als weiteres optisches Element umfasst das erste optische System eine Sammellinse 10 zur Fokussierung eines abzubildenden Gegenstands auf einen Sensor 12. Der Sensor 12 ist ein Matrix-Detektor, auch Focal Plane Array (FPA) genannt, der als ein im infraroten Wellenlängenbereich empfindliches Mikro-Bolometer ausgestaltet ist.

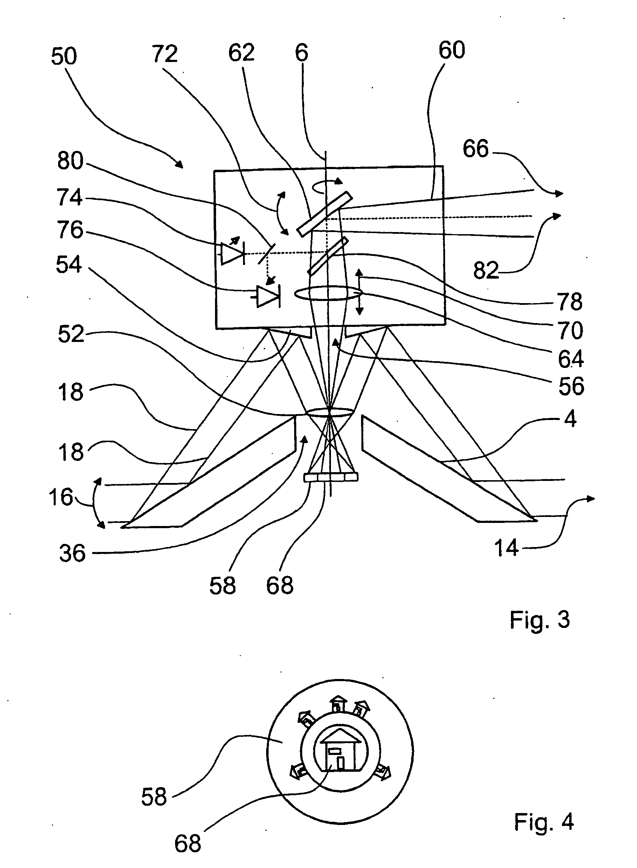

Durch das erste optische System des Kamerasystems 2 ist ein Raumwinkelbereich 14 einsehbar, der sich rund um die Längsachse 6 mit einem Öffnungswinkel 16 von 50° erstreckt, wobei der Öffnungswinkel 16 symmetrisch um eine senkrecht zur Längsachse 6 gedachte Ebene ausgerichtet ist. Ein erster Strahlengang 18 verläuft rotationssymmetrisch um die Längsachse 6 aus dem Raumwinkelbereich 14 auf den Konvexspiegel 4 und ist von dort zum Spiegel 8 geführt. Der Spiegel 8 wiederum führt dem Strahlengang 18 folgende Strahlung auf die Sammellinse 10, durch die die Strahlung entlang des Strahlengangs 18 zum Sensor 12 hin fokussiert wird. Auf diese Weise wird der Raumwinkelbereich 14 bzw. im Raumwinkelbereich 14 befindliche Gegenstände auf dem Sensor 12 abgebildet. Die Abbildung erfolgt in Form eines kreisförmigen Bildes, das ähnlich wie das in Figur 4 im äußeren Bereich dargestellte Abbild ist. Der um die Längsachse 6 innere Bereich des Sensors 12 bleibt dabei ungenutzt.

Zusätzlich zum ersten optischen System umfasst das Kamerasystem 2 ein zweites optisches System, durch das ein Teilbereich 20 des Raumwinkelbereichs 14 abgetastet werden kann. Dieses zweite optische System weist eine Laserdiode 22 auf, die zur Aussendung von infrarotem Laserlicht ausgelegt ist. Ebenfalls Teil des zweiten optischen Systems ist ein Spiegel 24, durch den von der Laserdiode 22 kommende Strahlung hindurchtreten kann, der jedoch zur Laserdiode 22 hin ausgerichtete Strahlung zu einer als Detailsensor verwendeten Fotodiode 26 hin reflektiert. Die Fotodiode 26 ist im selben Wellenlängenbereich empfindlich, in dem die Laserdiode 22 Strahlung aussendet. Das zweite optische System umfasst des Weiteren ein bewegliches optisches Element 28, das als ein mikrooptischer Scanner mit einer Sammellinse 30 und einer Zerstreuungslinse 32 ausgestaltet ist. Die Zerstreuungslinse 32 ist in jede zur Längsachse 6 senkrechte Raumrichtung relativ zur Sammellinse 30 verschiebbar. Eine solche Verschiebung wird durch nicht dargestellte Aktuatoren erreicht, die auf der Wirkungsweise des Piezo-Effekts basieren. Das bewegliche optische Element 28 ist mit seiner Zerstreuungslinse 32 somit relativ zur Fotodiode 26 und relativ zum Sensor 12 beweglich angeordnet.

Sowohl dem ersten als auch dem zweiten optischen System hinzuzurechnen ist die Sammellinse 10, die auf ihrer in Figur 1 nach oben gerichteten Oberfläche dichroitisch verspiegelt ist. Diese Verspiegelung reflektiert Strahlung innerhalb eines schmalen Frequenzbands und lässt Strahlung außerhalb dieses Frequenzbands im Wesentlichen ungehindert passieren. Innerhalb dieses Frequenzbands liegt die von der Laserdiode 22 emittierte Strahlung, so dass diese Laserstrahlung von der Oberfläche der Sammellinse 10 reflektiert wird.

Während des Betriebs des Kamerasystems 2 wird von der Laserdiode 22 Laserstrahlung in einem zweiten Strahlengang 34 entlang der Längsachse 6 in Richtung des Spiegels 24 ausgesandt. Die Strahlung passiert den Spiegel 24 im Wesentlichen ungehindert und trifft auf das bewegliche optische Element 28. Bei einer um die Längsachse 6 symmetrischen Stellung sowohl der Sammellinse 30 als auch der Zerstreuungslinse 32 wird die Laserstrahlung von dem beweglichen optischen Element 28 nicht abgelenkt. In der Darstellung in Figur 1 würde sie senkrecht nach unten durch den Spiegel 8 hindurchtreten und mittig auf der Sammellinse 10 auftreffen. Zur Ausrichtung der von der Laserdiode 22 ausgestrahlten Laserstrahlung auf einen gewünschten Teilbereich 20 wird die Zerstreuungslinse 32 senkrecht zur Längsachse 6 ein Stück weit verschoben. In Figur 1 ist die Zerstreuungslinse 32 beispielhaft nach links verschoben. Hierdurch wird die Laserstrahlung aus der Längsachse 6 herausgelenkt, so dass sie ein Stück weit rechts von der Mitte des Spiegels 8 durch diesen hindurchtritt. Die Sammellinse 30 und die Zerstreuungslinse 32 bilden in ihrer Teleskop-Anordnung eine afokale Baugruppe und können durch eine relative Verschiebung gegeneinander den Strahl ablenken.

Die dem zweiten Strahlengang 34 folgende Laserstrahlung trifft auf die dichroitische Spiegelschicht der Sammellinse 10 auf und wird von dieser zum Spiegel 8 zurückreflektiert und auf diese Weise in den ersten Strahlengang 18 eingekoppelt. Die Sammellinse 10 dient somit auch zur Einkopplung von Strahlung aus der Laserdiode 22 vom zweiten Strahlengang 34 in den ersten Strahlengang 18. Ab der Reflexion des Laserlichts durch die dichroitische Schicht verlaufen der zweite Strahlengang 34 und der erste Strahlengang 18 identisch zueinander. Vom Spiegel 8 wird das Laserlicht in Richtung zum Konvexspiegel 4 hin reflektiert, der das Laserlicht wiederum in den ausgewählten Teilbereich 20 reflektiert. Der Teilbereich 20 liegt vollständig innerhalb des Raumwinkelbereichs 14 und hat - bedingt durch die starke Fokussierung des Laserlichts - nur eine geringe Winkelausdehnung.

Der Konvexspiegel 4, der Spiegel 8 und die Sammellinse 10 sind drei optische Elemente, die sowohl im ersten Strahlengang 18 als auch im zweiten Strahlengang 34 angeordnet sind. Sie sind sowohl dem ersten optischen System als auch dem zweiten optischen System hinzuzurechnen.

Der Konvexspiegel 4 weist in seinem der Längsachse 6 nächsten Bereich eine Öffnung 36 auf, durch den der erste Strahlengang 18 hindurch und in das Innere des Konvexspiegels 4 gelenkt wird. Ebenfalls im Innern des Konvexspiegels 4 ist der Sensor 12 angeordnet, der mit einer nicht dargestellten Haltevorrichtung fest mit dem Konvexspiegel 4 verbunden ist. Durch diese geometrische Ausgestaltung des Kamerasystems 2 kann der erste Strahlengang 18 symmetrisch zur Längsachse 6 gehalten werden, was eine optisch fehlerfreie Abbildung oder zumindest eine Abbildung in einer guten optischen Qualität von Gegenständen aus dem Raumwinkelbereich 14 auf dem Sensor 12 erleichtert.

Die Laserdiode 22 und die Photodiode 26 sind ein Teil einer Vorrichtung zur Entfernungsmessung, die in einer dem Fachmann bekannten Art und Weise betrieben werden kann. Hierzu sendet die Laserdiode 22 gepulste Laserstrahlung aus, die auf einen im Teilbereich 20 angeordneten Gegenstand trifft und von diesem in Richtung des Konvexspiegels 4 reflektiert wird. Das reflektierte Laserlicht wird vom Konvexspiegel 4 auf den Spiegel 8 und von dort auf die Sammellinse 10 reflektiert, deren dichroitische Schicht das Laserlicht auf die Zerstreuungslinse 32 des beweglichen optischen Elements 28 wirft. Die Sammellinse 10 dient mit ihrer dichroitischen Spiegelschicht somit als dichroitisches Element zur Trennung des ersten Strahlengangs 18 vom zweiten Strahlengang 34. Das bewegliche optische Element 28 koppelt die reflektierte Laserstrahlung in die entlang der Längsachse 6 verlaufende Symmetrieachse des Kamerasystems 2 ein, aus der die Laserstrahlung durch den Spiegel 24 wieder herausreflektiert und der Fotodiode 26 zugeleitet wird. Die Fotodiode 26 detektiert das reflektierte Laserlicht und führt daraus umgewandelte Spannungssignale einer Auswerteelektronik zu, die in Figur 1 nicht dargestellt ist. Diese Auswerteelektronik berechnet die Laufzeit des gepulsten Laserlichts und errechnet hieraus die Entfernung des vom Laserlicht im Teilbereich 20 angestrahlten Gegenstands.

Figur 2 zeigt ein dem in Figur 1 dargestellten Kamerasystem 2 recht ähnliches Kamerasystem 40. Gleichartige Bauteile der Kamerasysteme 2 und 40 sind mit gleichem Bezugszeichen versehen. Die Funktionsweise des Kamerasystems 40 entspricht weitgehend dem des Kamerasystems 2, wobei im Folgenden nur die Unterschiede des Kamerasystems 40 zum Kamerasystem 2 erläutert werden.

Das Kamerasystem 40 umfasst einen kugelabschnittförmigen Konvexspiegel 42 und einen Spiegel 44, der eine hyperboloidförmige Außenfläche aufweist. Beide Spiegel 42, 44 sind rotationssymmetrisch um die Längsachse 6 des Kamerasystems 40 angeordnet und können als Konvexspiegel bezeichnet werden. Diese zweistufige Spiegelanordnung ist - ebenso wie die zweistufige Spiegelanordnung aus Figur 1 - so ausgelegt, dass sie zusammen mit der Sammellinse 10 ein auf Brechung und Reflexion basierendes optisches System bildet, das nur ein effektives Projektionszentrum besitzt. Auf diese Weise ist es möglich, über geeignete mathematische Transformationen aus einem omnidirektionalen Bild ein panoramisches oder perspektivisches Bild zu rekonstruieren, das im Wesentlichen frei von optischen Fehlern ist.

Eine im infraroten Strahlungsbereich betreibbare Laserdiode 46 des Kamerasystems 40 ist dazu ausgelegt, Laserstrahlung in mehreren Frequenzen'(zeitlich hintereinander oder gleichzeitig) aussenden zu können. Diese Strahlung wird analog wie oben beschrieben auf einen Gegenstand oder ein Gas im Teilbereich 20 gelenkt, von dort reflektiert und trifft auf ein zur Analyse des reflektierten Laserlichts vorgesehenes Spektrometer 48. Die Laserdiode 46 und das Spektrometer 48 sind mit einer Steuer- und Auswerteelektronik verbunden, die in Figur 2 nicht gezeigt ist. Mit Hilfe dieser Elektronik können Informationen über die Zusammensetzung des Gases oder Gegenstands und dessen Temperatur im Teilbereich 20 ermittelt werden. Die Funktionsweise eines Spektrometers 48 und der Elektronik zum Erhalt dieser Information ist dem Fachmann durchaus geläufig und wird daher im Folgenden nicht weiter beschrieben.

Im Gegensatz zu der in Figur 1 dargestellten Sammellinse 10 reflektiert die dichroitische Schicht der Sammellinse 10 aus Figur 2 nicht nur ein, sondern mehrere schmale Frequenzbänder, die alle im infraroten Spektralbereich liegen. Außerhalb dieser Frequenzbänder kann die Strahlung die dichroitische Schicht im Wesentlichen ungehindert passieren. Innerhalb dieser Frequenzbänder liegen die von der Laserdiode 46 emittierte Strahlung, so dass diese Laserstrahlung von der Oberfläche der Sammellinse 10 reflektiert wird.

Ein weiteres Ausführungsbeispiel eines erfindungsgemäßen Kamerasystems 50 ist in Figur 3 dargestellt. Das Kamerasystem 50 umfasst analog wie das in Figur 1 gezeigte Kamerasystem 2 einen kegelstumpfförmigen Konvexspiegel 4 und eine Sammellinse 52, die rotationssymmetrisch um die Längsachse 6 des Kamerasystems 50 angeordnet sind. Die Sammellinse 52 trägt jedoch keine dichroitische Verspiegelung. Ebenfalls rotationssymmetrisch um die Längsachse 6 ist ein zweiter Spiegel 54 angeordnet, der in seinem Zentrum eine Öffnung 56 aufweist.

Der erste Strahlengang 18 des Kamerasystems 50 weist den gleichen Verlauf auf wie der des Kamerasystems 2, wodurch Gegenstände im Raumwinkelbereich 14 ringförmig auf einem Sensor 58 abgebildet werden, wie dies in Figur 4 dargestellt ist.

Ein einen zweiten Strahlengang 60 bildendes zweites optisches System umfasst einen beweglichen Spiegel 62, eine Sammellinse 64 und die auch zum ersten optischen System zählbare Sammellinse 52. Durch das zweite optische System kann ein in einem Teilbereich 66 angeordneter Gegenstand auf einem Detailsensor 68 abgebildet werden. Das zweite optische System ist mit seinen Elementen hierbei so eingerichtet, dass der im Teilbereich 66 angeordnete Gegenstand auf dem Detailsensor 68 größer abgebildet wird als durch den ersten Strahlengang 18 auf dem Sensor 58. Das Kamerasystem 50 nutzt auf diese Weise die Totzone des Konvexspiegels 4 und des zweiten Spiegels 54, um innerhalb des omnidirektionalen Bildes des Raumwinkelbereichs 14 auf dem Sensor 58 mit Hilfe des zweiten optischen Systems einen interessierenden Ausschnitt auf dem Detailsensor 68 vergrößert darzustellen.

Die Sammellinse 64 ist in der mit Pfeilen angedeuteten Bewegungsrichtung 70 entlang der Längsachse 6 des Kamerasystems 50 beweglich. Hierdurch weist das zweite optische System eine Zoomfunktion auf, durch die der im Teilbereich 66 angeordnete Gegenstand innerhalb vorgegebener Grenzen in frei wählbarer Größe auf dem Detailsensor 68 abgebildet werden kann.

Der Detailsensor 68 und der Sensor 58 sind als ein Sensor einstückig miteinander verbunden ausgestaltet. Alternativ und ohne Änderungen in der schematischen Darstellung von Figur 3 können der Detailsensor 68 und der Sensor 58 auch in verschiedenen Frequenzbereichen sensitiv und getrennt voneinander angeordnet sein. So kann der Sensor 58 für den sichtbaren Bereich und der Detailsensor 68 für den infraroten Bereich ausgelegt sein, so dass durch das erste optische System ein Rundumbild im sichtbaren Bereich und durch das zweite optische System ein detaillierteres und zoombares Detailbild im Wärmestrahlungsbereich erzeugbar ist. Bei einem als Bewegungsmelder fungierenden Kamerasystem ist wiederum ohne Änderungen der Darstellung in Figur 3 der Detailsensor 68 für den sichtbaren Bereich und der Sensor 58 für den infraroten Bereich ausgelegt. Eine Wärmequelle kann somit in einem zu überwachenden Raum detektiert und Wachpersonal kann ein detailliertes Überprüfungsbild im sichtbaren Bereich zur Verfügung gestellt werden.

Zum Auswählen des Teilbereichs 66 aus dem gesamten Raumwinkelbereich 14 ist der Spiegel 62 nicht nur um mindestens 360° um die Längsachse 6 des Kamerasystems 50 rotierbar, sondern auch, wie durch den Pfeil 72 angedeutet, verschwenkbar.

Das Kamerasystem 50 umfasst des Weiteren ein drittes optisches System, das seinerseits eine Laserdiode 74, eine Fotodiode 76, einen Auskoppelspiegel 78 mit einer dichroitischen Beschichtung und einen Strahlteiler 80 umfasst. Die Laserdiode 74 wird bei einer Frequenz betrieben, die nicht in einem Frequenzbereich liegt, in dem der Sensor 58 oder der Detailsensor 68 sensitiv sind. Analog wie zu Figur 1 beschrieben, dient das dritte optische System mit einer nicht dargestellten Steuer- und Auswerteelektronik als Entfernungsmessvorrichtung. Hierbei wird durch den von der Laserdiode 74 ausgesandten Laserstrahl ein Teilbereich 82 abgedeckt, der kleiner ist als der zum zweiten Strahlengang 60 zugehörige Teilbereich 66.

### Bezugszeichen

- 2: Kamerasystem
- 4: Konvexspiegel
- 6: Längsachse
- 8: Spiegel
- 10: Sammellinse
- 12: Sensor
- 14: Raumwinkelbereich
- 16: Öffnungswinkel
- 18: Strahlengang
- 20: Teilbereich
- 22: Laserdiode
- 24: Spiegel
- 26: Fotodiode
- 28: optisches Element
- 30: Sammellinse
- 32: Zerstreuungslinse
- 34: Strahlengang
- 36: Öffnung
- 40: Kamerasystem
- 42: Konvexspiegel
- 44: Spiegel
- 46: Laserdiode
- 48: Spektrometer
- 50: Kamerasystem
- 52: Sammellinse
- 54: Spiegel
- 56: Öffnung
- 58: Sensor
- 60: Strahlengang
- 62: Spiegel
- 64: Sammellinse
- 66: Teilbereich
- 68: Detailsensor
- 70: Bewegungsrichtung
- 72: Pfeil
- 74: Laserdiode
- 76: Fotodiode
- 78: Auskoppelspiegel
- 80: Strahlteiler
- 82: Teilbereich

## Patentansprüche

1. Kamerasystem (2, 40, 50) mit einem Sensor (12, 58), einem einen Konvexspiegel (4, 42) umfassenden ersten optischen System, durch das ein Raumwinkelbereich (14) über einen ersten Strahlengang (18) auf dem Sensor (12, 58) abbildbar ist, einem zweiten optischen System, durch das ein Teilbereich (20, 66, 82) des Raumwinkelbereichs (14) über einen zweiten Strahlengang (34, 60) auf einem Detailsensor (68) erfassbar ist, wobei der Teilbereich (20, 66, 82) durch ein relativ zu den Sensoren (12, 58, 68) bewegliches optisches Element (28) auswählbar ist.

2. Kamerasystem (2, 40, 50) nach Anspruch 1,
**gekennzeichnet durch** mindestens ein im ersten Strahlengang (18) und im zweiten Strahlengang (34, 60) angeordnetes optisches Element.

3. Kamerasystem (2, 40, 50) nach Anspruch 1 oder 2,
**dadurch gekennzeichnet, dass** der Sensor (12, 58) für einen ersten Frequenzbereich und der Detailsensor (68) für einen zweiten vom ersten unterschiedlichen Frequenzbereich ausgelegt ist.

4. Kamerasystem (2, 40, 50) nach einem der vorhergehenden Ansprüche,
**gekennzeichnet durch** ein dichroitisches Element zur Trennung des ersten Strahlengangs (18) vom zweiten Strahlengang (34, 60).

5. Kamerasystem (2, 40, 50) nach einem der vorhergehenden Ansprüche,
**gekennzeichnet durch** eine Strahlungsquelle und ein optisches Element zur Einkopplung von Strahlung aus der Strahlungsquelle in den ersten Strahlengang (18).

6. Kamerasystem (2, 50) nach Anspruch 5,
**gekennzeichnet durch** eine Entfemungsmessvorrichtung, wobei die Strahlungsquelle ein Laser und der Detailsensor (68) eine Photodiode (26, 76) ist.

7. Kamerasystem (40) nach Anspruch 5,
**gekennzeichnet durch** eine Vorrichtung zur Spektralanalyse, wobei die Strahlungsquelle ein Laser und der Detailsensor ein Spektrometer (48) ist.

8. Kamerasystem (50) nach einem der vorhergehenden Ansprüche,
**dadurch gekennzeichnet, dass** der Sensor (58) mit dem Detailsensor (68) einstückig ausgeführt ist.

9. Kamerasystem (2, 40, 50) nach einem der vorhergehenden Ansprüche,
**gekennzeichnet durch** einen zweiten im ersten Strahlengang (18) angeordneten Spiegel (8, 44, 54).

10. Kamerasystem (2, 40, 50) nach einem der vorhergehenden Ansprüche,
**dadurch gekennzeichnet, dass** der Konvexspiegel (4, 42) eine Öffnung (36) umfasst, durch die der erste Strahlengang (18) hindurchgeführt ist.

11. Kamerasystem (2, 40) nach einem der vorhergehenden Ansprüche,
**dadurch gekennzeichnet, dass** das bewegliche optische Element (28) eine Sammellinse (30) und eine Zerstreuungslinse (32) umfasst, die gegeneinander verschiebbar sind.

## Claims

1. Camera system (2, 40, 50) having a sensor (12, 58), a first optical system which comprises a convex mirror (4, 42) and by which a solid angle range (14) can be projected via a first beam path (18) onto the sensor (12, 58), and a second optical system by which a sub-range (20, 66, 82) of the solid angle range (14) can be recorded on a detail sensor (68) via a second beam path (34, 60), wherein the sub-range (20, 66, 82) is selectable by an optical element (28) which can be moved relative to the sensors (12, 58, 68).

2. Camera system (2, 40, 50) according to Claim 1, **characterized by** at least one optical element arranged in the first beam path (18) and in the second beam path (34, 60).

3. Camera system (2, 40, 50) according to Claim 1 or 2, **characterized in that** the sensor (12, 58) is designed for a first frequency range and the detail sensor (68) is designed for a second frequency range, which is different from the first.

4. Camera system (2, 40, 50) according to one of the preceding claims, **characterized by** a dichroic element for separating the first beam path (18) from the second beam path (34, 60).

5. Camera system (2, 40, 50) according to one of the preceding claims, **characterized by** a radiation source and an optical element for injecting radiation from the radiation source into the first beam path (18).

6. Camera system (2, 50) according to Claim 5, **characterized by** a range measuring device, the radiation source being a laser and the detail sensor (68) being a photodiode (26, 76).

7. Camera system (40) according to Claim 5, **characterized by** a spectral analysis device, the radiation source being a laser and the detail sensor being a spectrometer (48).

8. Camera system (50) according to one of the preceding claims, **characterized in that** the sensor (58) is designed integrally with the detail sensor (68).

9. Camera system (2, 40, 50) according to one of the preceding claims, **characterized by** a second mirror (8, 44, 54) arranged in the first beam path (18).

10. Camera system (2, 40, 50) according to one of the preceding claims, **characterized in that** the convex mirror (4, 42) comprises an opening (36) through which the first beam path (18) is fed.

11. Camera system (2, 40) according to one of the preceding claims, **characterized in that** the mobile optical element (28) comprises a converging lens (30) and a diverging lens (32), which can be displaced relative to each other.

## Revendications

1. Système de caméra (2, 40, 50) avec un détecteur (12, 58), un premier système optique comprenant un miroir convexe (4, 42), par lequel une zone angulaire solide (14) peut être reproduite sur le détecteur (12, 58) par l'intermédiaire d'un premier trajet de rayons (18), un deuxième système optique, par lequel une région partielle (20, 66, 82) de la zone angulaire solide (14) peut être captée sur un détecteur de détail (68) par l'intermédiaire d'un deuxième trajet de rayons (34, 60), dans lequel la région partielle (20, 66, 82) peut être sélectionnée par un élément optique (28) mobile par rapport aux détecteurs (12, 58, 68).

2. Système de caméra (2, 40, 50) selon la revendication 1, **caractérisé par** au moins un élément optique disposé dans le premier trajet de rayons (18) et dans le deuxième trajet de rayons (34, 60).

3. Système de caméra (2, 40, 50) selon la revendication 1 ou 2, **caractérisé en ce que** le détecteur (12, 58) est conçu pour un premier domaine de fréquence et le détecteur de détail (68) est conçu pour un deuxième domaine de fréquence différent du premier domaine de fréquence.

4. Système de caméra (2, 40, 50) selon l'une quelconque des revendications précédentes, **caractérisé par** un élément dichroïque destiné à séparer le premier trajet de rayons (18) du deuxième trajet de rayons (34, 60).

5. Système de caméra (2, 40, 50) selon l'une quelconque des revendications précédentes, **caractérisé par** une source de rayonnement et un élément optique destiné à coupler le rayonnement provenant de la source de rayonnement au premier trajet de rayons (18).

6. Système de caméra (2, 50) selon la revendication 5, **caractérisé par** un dispositif de mesure de distance, dans lequel la source de rayonnement est un laser et le détecteur de détail (68) est une photodiode (26, 76).

7. Système de caméra (40) selon la revendication 5, **caractérisé par** un dispositif pour l'analyse spectrale, dans lequel la source de rayonnement est un laser et le détecteur de détail est un spectromètre (48).

8. Système de caméra (50) selon l'une quelconque des revendications précédentes, **caractérisé en ce que** le détecteur (58) est réalisé d'une seule pièce avec le détecteur de détail (68).

9. Système de caméra (2, 40, 50) selon l'une quelconque des revendications précédentes, **caractérisé par** un deuxième miroir (8, 44, 54) disposé dans le premier trajet de rayons (18).

10. Système de caméra (2, 40, 50) selon l'une quelconque des revendications précédentes, **caractérisé en ce que** le miroir convexe (4, 42) comporte une ouverture (36), à travers laquelle le premier trajet de rayons (18) est conduit.

11. Système de caméra (2, 40) selon l'une quelconque des revendications précédentes, **caractérisé en ce que** l'élément optique mobile (28) comprend une lentille convergente (30) et une lentille divergente (32), qui sont mobiles l'une par rapport à l'autre.
